Europäisches Patentamt

European Patent Office

Office européen des brevets

(11) Publication number: 0 588 154 A2

# EUROPEAN PATENT APPLICATION

(21) Application number: 93113982.8

(51) Int. Cl.5: **C08L 21/00**, C08K 7/00

(22) Date of filing: **01.09.93**

(30) Priority: **02.09.92 JP 234954/92**
**02.09.92 JP 234955/92**
**10.02.93 JP 22395/93**
**31.03.93 JP 74081/93**

(43) Date of publication of application:
**23.03.94 Bulletin 94/12**

(84) Designated Contracting States:
**DE FR GB**

(71) Applicant: **TOKAI RUBBER INDUSTRIES, LTD.**
**3600, Aza-Utazu,**
**Oaza-Kitatoyama**
**Komaki-shi Aichi-ken(JP)**

(72) Inventor: **Shibahara, Akihiro, c/o Tokai Rubber**
**Ind., Ltd.**
**3600 Aza Utazu,**
**Oaza Kitatoyama**
**Komaki-shi, Aichi-ken(JP)**
Inventor: **Jinno, Fumihiko, c/o Tokai Rubber**
**Ind., Ltd.**
**3600 Aza Utazu,**
**Oaza Kitatoyama**
**Komaki-shi, Aichi-ken(JP)**
Inventor: **Kato, Hajime, c/o Tokai Rubber Ind.,**
**Ltd.**
**3600 Aza Utazu,**
**Oaza Kitatoyama**
**Komaki-shi, Aichi-ken(JP)**

(74) Representative: **Tiedtke, Harro, Dipl.-Ing. et al**
**Patentanwaltsbüro**
**Tiedtke-Bühling-Kinne & Partner**
**Bavariaring 4**
**D-80336 München (DE)**

(54) **Vibration-proof rubber composition.**

(57) The vibration-proof rubber composition comprises a rubber elastic material and a micro solid having the maximum dimension of 1 to 1000 μm and the aspect ratio of not more than 10 which is dispersed and immersed into the rubber elastic material. Therefore, the vibration-proof rubber composition maintains the static controlability while it obtains excellent characteristics for decreasing vibration and noise. Furthermore, the vibration-proof rubber composition has excellent fatigue resistance.

## BACKGROUND OF THE INVENTION

### Field of the Invention

The present invention relates to a vibration-proof rubber composition which is suitable for use as vibration-proof rubber in automobiles such as a strut mount, a suspention bush, an engine mount, a liquid mount and so on.

### Description of the Related Art

Conventionally, vibration-proof rubber such as a strut mount, a suspension bush or an engine mount is used for decreasing vibration and noise of automobiles. Generally, in order to decrease vibration and noise, it is preferable that a rubber composition which is used as vibration-proof rubber has low rigidity and that it is soft.

On the contrary, it is preferable that a rubber composition has high rigidity and that it is hard so as to achieve control stability of automobiles such as running, stopping and cornering, and so as not to slant the position for supporting engines and so on.

As above-described, vibration-proof rubber requires two contradictory characteristics. Namely, one is to decrease vibration and noise, and the other is to achieve the control stability. In view of the movement which acts on vibration-proof rubber, vibration and noise show dynamic movement having relatively high frequency. On the contrary, the control stability shows static and slow movement. From this point of view, a descrease of vibration and noise is determined by dynamic spring characteristics (herein referred to as dynamic spring constant), and the control stability is determined by static spring characteristics (herein referred to as static spring constant). Therefore, when the dynamic spring constant is small, vibration and noise can be decreased. When the static spring constant is large, the control stability can be obtained.

The relation between the dynamic spring constant and the static spring constant is generally defined as dynamic magnification in which the ratio between them is represented. Therefore, it is preferable that the dynamic magnification of a vibration-proof rubber composition is small.

Generally, in a vibration-proof rubber composition, the dynamic spring constant is higher than the static spring constant. Most of vibration-proof rubber compositions are reinforced in such a manner that rubber is filled with carbon black, and filling mixed amount of carbon-black is prepared to controll the elastic modulus or hardness of rubber. When the filling mixed amount is increased, the dynamic magnification becomes larger.

When the mixed amount of carbon black is increased, the static spring constant becomes larger, and the dynamic spring constant becomes much larger. Namely, when the control stability is obtained by increasing the hardness of rubber, vibration and noise are increased.

It is known that rubber having low dynamic magnification is produced by the method in which the bridge density of rubber is increased to control the dynamic magnification. However, when the bridge density is increased, the tear force of rubber is deteriorated so that it is not suitable for practical use.

Japanese Laid-Open Patent Publication No. 34228/1992 discloses vibration-proof rubber composition having low dynamic magnification. The vibration-proof rubber composition comprises a rubber material and short fibers. The rubber material is selected from the group comprising natural rubber, composite rubber and the combination thereof. For example, the rubber material include blend rubber comprising natural rubber and butadiene rubber. The short fiber generally has the length of not more than 10mm, the ratio of the length to the diameter of not less than 40, and the initial elastic modulus of not less than 40g/d. The short fibers include meta-aramid fiber having the length of 3mm and the diameter of 14$\mu$m, and nylon 66 fiber having the length of 3mm and the diameter of 27$\mu$m.

As known from Japanese Laid-Open Patent Publication No. 34228/1992, the fiber is mixed with rubber in order to obtain the rubber composition having low dynamic magnification. However, inventors of the present invention found that the above rubber composition has low fatigue resistance.

## SUMMARY OF THE INVENTION

In view of the above problems, it is an object of the present invention to provide a vibration-proof rubber composition having high rigidity and excellent fatigue resistance and in which the dynamic magnification is increased.

In order to achieve the above object, inventors have found that the dynamic magnification and the fatigue resistance of the rubber composition are affected by the maximum dimension of the micro solid which is added into rubber, and they completed the present invention.

The vibration-proof rubber composition according to the present invention comprises a rubber elastic material and a micro solid having the maximum dimension of 1 to 1000μm which is dispersed and immersed into the rubber elastic material. The maximum dimension is defined as the longest distance from one end to the other end of the micro solid. For example, when the micro solid is a fiber, the maximum dimension is equal to the length of its diameter. When the micro solid is like a rugby ball, the maximum dimension is equal to the length of its major axis. The micro solid is generally used in a group, so the maximum dimension is equal to the average maximum dimension of the micro solid group.

The maximum dimension of the micro solid is in the range of 1 to 1000μm. When the maximum dimension is less than 1 μm, the dynamic magnification is high, and vibration-proof characteristic is not fully obtained. On the contrary, when the maximum dimension is more than 1000 μm, the fatigue resistance is extremely deteriorated. Namely, as the maximum dimension of the micro solid is smaller, the fatigue resistance becomes excellent. Therefore, the maximum dimension of the micro solid is preferably in the range of 1 to 100 μm, more preferably, 1 to 50 μm in order to obtain excellent fatigue resistance. The micro solid has the above maximum dimension only when the vibration-proof rubber composition is vulcanized and it is used as the vibration-proof rubber. The micro solid is broken to have the dimension of less than 1 μm, or it is coagulated to have the diameter of more than 1000 μm when the rubber composition is prepared or it is used as vibration-proof rubber. Therefore, these micro solid cannot be used in the present invention.

It is more preferable that the micro solid according to the present invention has a small aspect ratio, namely, it is almost spherical. The aspect ratio is less than 10, preferably, less than 2. When the maximum dimension of the micro solid is in the range of 1 to 1000 μm, the dynamic magnification is hardly affected by the aspect ratio. However, the fatigue resistance is much affected by the aspect ratio. Namely, when the aspect ratio is smaller, the fatigue resistance becomes excellent.

In the present invention, the micro solid which constitute the vibration-proof rubber composition include epoxy resin; phenol resin; thermosetting resin such as polyimide resin; thermoplastic resin such as polyolefine resin, polyamide resin or polyester resin; and inorganic substances such as oxide or nitride. The polyolefine resin include polypropylene having high heat resistance. The polyamide resin include nylon 6 or nylon 66. The thermoplastic resin is required to have higher fusing point than the vulcanizing temperature. Oxide include glass, silicon oxide, aluminum oxide, planar mineral such as mica.

The mixed amount of the micro solid is preferably 1 to 50 parts by weight, more preferably, 2 to 30 parts by weight against 100 parts by weight of rubber elastic material. When the mixed amount of the micro solid is less than 1 part, the static spring constant is not sufficiently increased. When the mixed amount of the micro solid is more than 50 parts by weight, the processability (the roll workability) is deteriorated.

Concerning the present invention, the rubber elastic material which constitues the vibration-proof rubber composition include natural rubber, composite rubber or blend rubber comprising natural rubber and composite rubber. The composite rubber include styrene-butadiene rubber, butadiene rubber, isoprene rubber, chloroprene rubber, isobutylene-isoprene rubber, chlorine-isobutylene-isoprene rubber, acrylonitrile-butadiene rubber, hydrogen-acrylonitrile-butadiene rubber, ethylene-propylene-diene rubber, ethylene-propylene rubber, acrylic rubber, silicon rubber and so on. The rubber elastic material comprises at least one or more than two kinds of the above composite rubber.

In the vibration-proof rubber composition according to the present invention, other additives such as a vulcanizing agent, a vulcanization accelerater, a processing aid, an antioxidant, a process oil, a softner, a reinforced filler such as carbon black can be added except the above rubber elastic material and the micro solid.

Concerning the rubber composition according to the present invention, the above rubber elastic material, the above micro solid and the above additives are kneaded by a banbury mixer. Then, the mixed substance is molded and vulcanized by an injection vulcanizing machine to obtain the vibration-proof rubber composition.

In the vibration-proof rubber composition according to the present invention, the micro solid having the maximum dimension of 1 to 1000 μm is dispersed and immersed into the rubber elastic material. The vibration-proof rubber composition is improved in the rigidity, namely, the static spring constant due to the micro solid. However, the dynamic spring constant is controlled not to be increased, and the dynamic magnification is deteriorated. When the micro solid has the maximum dimension of 1 to 1000 μm and the aspect ratio of not more than 10, the static spring constant is much increased. Furthermore, the dynamic spring constant is controlled not to be increased, and the dynamic magnificaiton is deteriorated.

The vibration-proof rubber composition according to the present invention maintains high static spring constant, namely, the static controlability while it obtains low dynamic spring constant, namely, excellent

3

characteristics for decreasing vibration and noise.

The vibration-proof rubber composition according to the present invention has excellent fatigue resistance. When the micro solid is gradually smaller to have the maximum dimension of not more than 100 $\mu$m, 50 $\mu$m and 10 $\mu$m, the fatigue resistance becomes excellent. When the micro solid has the smaller aspect ratio and it is almost spherical, the fatigue resistance becomes improved.

As above-described, the vibration-proof rubber composition according to the present invention is suitable for use as vibraiton-proof rubber for automobiles such as a strut mount, a suspension bush, an engine mount, a fluid mount and so on.

## BRIEF DESCRIPTION OF THE DRAWINGS

Figure 1 is an explanatory view of a sample for measuring the static spring constant and the dynamic spring constant.

Figure 2 is an explanatory view of a sample and a method for measuring shear fatigue.

Figure 3 is a diagram for showing the relationship between the average maximum dimension and the dynamic magnification of the micro solid of the rubber composition in the Preferred Embodiments 1 to 15 and the Comparative Examples 1 to 3.

Figure 4 is a diagram for showing the relationship between the frequency for generating the flaw due to the shear fatigue and the average maximum dimension of the micro solid of the rubber composition in the Preferred Embodiments 1 to 15 and the Comparative Examples 1 to 3.

Figure 5 is a diagram for showing the relationship between the frequency for generating the flaw due to the shear fatigue and the aspect ratio of the micro solid of the rubber composition in the Preferred Embodiments 18 to 27.

## DETAILED DESCRIPTION OF THE PREFERRED EMBODIMENTS

Having generally described the present invention, a further understanding can be obtained by reference to the specific preferred embodiments which are provided herein for purposes of illustration only and are not intended to limit the scope of the appended claims.

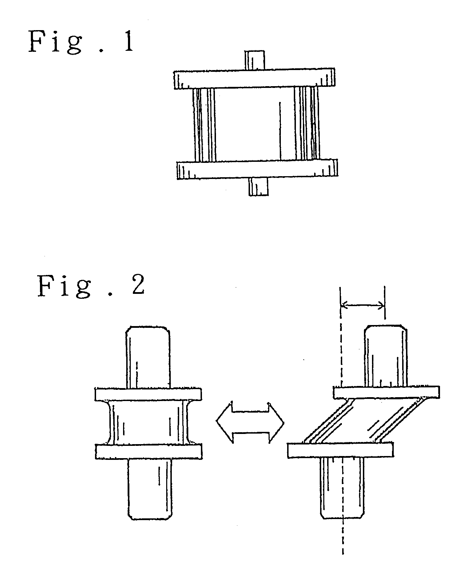

The Preferred Embodiments according to the present invention will be hereinafter described with reference to Figures 1 through 5.

### First Preferred Embodiment

A First Preferred Embodiment employed the following compositions and the following manners to obtain a vibration-proof rubber composition.

100 parts by weight of natural rubber, 10 parts by weight of nylon 6 grinding object whose average particle diameter was 40 $\mu$m and which was produced as A1030BRL (140 pass) by Unitika Ltd., 30 parts by weight of FEF-class carbon-black whose maximum dimension was 50nm, 5 parts by weight of zinc oxide, 1 part by weight of stearic acid, 4.5 parts by weight of antioxidant and 5 parts by weight of naphthene mineral oil were kneaded by a banbury mixer whose capacity was 1.7 liters. Then, 2.5 parts by weight of vulcanizing agent (sulfur) and 1 part by weight of vulcanization accelerater CZ were mixed by an open roll having 8 inches; thereby obtaining the vibration-proof rubber composition.

### Second Preferred Embodiment

A Second Preferred Embodiment employed the same compositions and the same manners as described in the First Preferred Embodiment except that 10 parts by weight of nylon 6 griding object whose average particle diameter was 140 $\mu$m and which was produced as A1030BRL (140 on) by Unitika Ltd. was used instead of A1030BRL (140 pass); thereby obtaining the vibration-proof rubber.

### Third Preferred Embodiment

A Third Preferred Embodiment employed the same compositions and the same manners as described in the First Preferred Embodiment except that 20 parts by weight of spherical nylon 6 whose average particle diameter was 38 $\mu$m and which was produced as SNP-638 by Unitika Ltd. was used instead of A1030BRL (140 pass); thereby obtaining the vibration-proof rubber.

4

### Fourth Preferred Embodiment

A Fourth Preferred Embodiment employed the same compositions and the same manners as described in the First Preferred Embodiment except that 10 parts by weight of spherical phenol resin whose average particle diameter was 10 $\mu$m and which was produced as Unibex C-10 by Unitika Ltd. was used instead of A1030BRL (140 pass); thereby obtaining the vibration-proof rubber.

### Fifth Preferred Embodiment

A Fifth Preferred Embodiment employed the same compositions and the same manners as described in the First Preferred Embodiment except that 10 parts by weight of spherical phenol resin whose average particle diameter was 50 $\mu$m and which was produced as Unibex C-50 by Unitika Ltd. was used instead of A1030BRL (140 pass); thereby obtaining the vibration-proof rubber.

### Sixth Preferred Embodiment

A Sixth Preferred Embodiment employed the same compositions and the same manners as described in the First Preferred Embodiment except that 10 parts by weight of hollow glass beads whose average particle diameter was in the range of 8 to 12 $\mu$m and which was produced as HSC-110 by Toshiba Paroteeny was used instead of A1030BRL (140 pass); thereby obtaining the vibration-proof rubber.

### Seventh Preferred Embodiment

A Seventh Preferred Embodiment employed the same compositions and the same manners as described in the First Preferred Embodiment except that 10 parts by weight of hollow ceramics beads whose average particle diameter was 45 $\mu$m and which was produced as Microcells SL-75 by Onoda Cement Co. Ltd. was used instead of A1030BRL (140 pass); thereby obtaining the vibration-proof rubber.

### Eighth Preferred Embodiment

An Eighth Preferred Embodiment employed the same compositions and the same manners as described in the First Preferred Embodiment except that 10 parts by weight of hollow ceramics beads whose average particle diameter was 115 $\mu$m and which was produced as Microcells SL-180 by Onoda Cement Co. Ltd. was used instead of A1030BRL (140 pass); thereby obtaining the vibration-proof rubber.

### Ninth Preferred Embodiment

A Ninth Preferred Embodiment employed the same compositions and the same manners as described in the First Preferred Embodiment except that 10 parts by weight of hollow ceramics beads whose average particle diameter was 175 $\mu$m and which was produced as Microcells SL-300 by Onoda Cement Co. Ltd. was used instead of A1030BRL (140 pass); thereby obtaining the vibration-proof rubber.

### Tenth Preferred Embodiment

A Tenth Preferred Embodiment employed the same compositions and the same manners as described in the First Preferred Embodiment except that 20 parts by weight of solid ceramics beads whose average particle diameter was 10 $\mu$m and which was produced as Superflow by Onoda Cement Co. Ltd. was used instead of A1030BRL (140 pass); thereby obtaining the vibration-proof rubber.

### Eleventh Preferred Embodiment

An Eleventh Preferred Embodiment employed the same compositions and the same manners as described in the First Preferred Embodiment except that 10 parts by weight of mica A whose average particle diameter was 2 $\mu$m and which was produced as Sintered Clay POLESTAR501 by Kyoritsu Ceramic Material Ltd. was used instead of A1030BRL (140 pass); thereby obtaining the vibration-proof rubber.

Twelfth Preferred Embodiment

A Twelfth Preferred Embodiment employed the same compositions and the same manners as described in the First Preferred Embodiment except that 10 parts by weight of mica B whose average particle diameter was 6.2 $\mu$m and which was produced as A-3 by Yamaguchi Ummo Ltd. was used instead of A1030BRL (140 pass); thereby obtaining the vibration-proof rubber.

Thirteenth Preferred Embodiment

A Thirteenth Preferred Embodiment employed the same compositions and the same manners as described in the First Preferred Embodiment except that 10 parts by weight of micro spherical resin carbide whose average particle diameter was 10 $\mu$m and which was produced as Unibex GCP-10 by Unitika Ltd. was used instead of A1030BRL (140 pass); thereby obtaining the vibration-proof rubber.

Fourteenth Preferred Embodiment

A Fourteenth Preferred Embodiment employed the same compositions and the same manners as described in the First Preferred Embodiment except that 10 parts by weight of micro spherical resin carbide whose average particle diameter was 100 $\mu$m and which was produced as Unibex GCP-100 by Unitika Ltd. was used instead of A1030BRL (140 pass); thereby obtaining the vibration-proof rubber.

Fifteenth Preferred Embodiment

A Fifteenth Preferred Embodiment employed the same compositions and the same manners as described in the First Preferred Embodiment except that 10 parts by weight of micro spherical resin carbide whose average particle diameter was 500 $\mu$m and which was produced as Unibex GCP-500 by Unitika Ltd. was used instead of A1030BRL (140 pass); thereby obtaining the vibration-proof rubber.

Comparative Example 1

A Comparative Example 1 employed the same compositions and the same manners as described in the First Preferred Embodiment except that 40 parts by weight of FEF-class carbon-black was used and that no micro solid was used; thereby obtaining the vibration-proof rubber.

Comparative Example 2

A Comparative Example 2 employed the same compositions and the same manners as described in the First Preferred Embodiment except that 12 parts by weight of FEF-class carbon-black was used and that 10 parts by weight of nylon 66 short fiber whose average particle diameter was $27\mu\phi$ X 3mm and which was produced as Nylon 66 was used instead of A1030BRL (140 pass); thereby obtaining the vibration-proof rubber.

Comparative Example 3

A Comparative Example 3 employed the same compositions and the same manners as described in the First Preferred Embodiment except that 25 parts by weight of FEF-class carbon-black was used and that 10 parts by weight of aramid short fiber whose average particle diameter was $14\mu\phi$ X 3mm and which was produced as Coanex by Teijin Limited was used instead of A1030BRL (140 pass); thereby obtaining the vibration-proof rubber.

The components of the above Preferred Embodiments and the above Comparative Examples are shown in Tables 1, 2 and 3.

The obtained vibration-proof rubber composition was vulcanized at the temperature of 150°C for 20 minutes to produce a vulcanized rubber sheet having the thickness of 2mm, and the normal materiality of the rubber (such as the tensile strength, the rupture extension and the hardness) were measured. Moreover, the obtained vibration-proof rubber composition was transfer-vulcanized at the temperature of 150°C for 30 minutes to produce vibration-proof rubber, and the dynamic characteristics (such as the static spring constant, the dynamic spring constant and the dynamic magnification) and the fatigue resistance were measured. Furthermore, the roll workability of the vibration-proof rubber composition was evaluated by the

6

rollability of rubber to the roll. The result is shown in Tables 4, 5 and 6.

TABLE 1

| | Embodiments | | | | | | |
|---|---|---|---|---|---|---|---|
| | 1 | 2 | 3 | 4 | 5 | 6 | 7 |
| Natural Rubber | 100 | 100 | 100 | 100 | 100 | 100 | 100 |
| Nylon 6 Grinding Object | 10 | — | — | — | — | — | — |
| Nylon 6 Grinding Object | — | 10 | — | — | — | — | — |
| Spherical Nylon 6 | — | — | 20 | — | — | — | — |
| Spherical Phenol Resin | — | — | — | 10 | — | — | — |
| Spherical Phenol Resin | — | — | — | — | 10 | — | — |
| Hollow Glass Beads | — | — | — | — | — | 10 | — |
| Hollow Ceramics Beads | — | — | — | — | — | — | 10 |
| Carbon Black | 30 | 30 | 30 | 30 | 30 | 30 | 30 |
| Vulcanizing Agent (Sulfur) | 2.5 | 2.5 | 2.5 | 2.5 | 2.5 | 2.5 | 2.5 |
| Vulcanization Accelerator CZ | 1 | 1 | 1 | 1 | 1 | 1 | 1 |
| Zinc Oxide | 5 | 5 | 5 | 5 | 5 | 5 | 5 |
| Stearic Acid | 1 | 1 | 1 | 1 | 1 | 1 | 1 |
| Antioxidant | 4.5 | 4.5 | 4.5 | 4.5 | 4.5 | 4.5 | 4.5 |
| Naphthene Mineral Oil | 5 | 5 | 5 | 5 | 5 | 5 | 5 |

## TABLE 2

| | Embodiments | | | | | | |
|---|---|---|---|---|---|---|---|
| | 8 | 9 | 1 0 | 1 1 | 1 2 | 1 3 | 1 4 |
| Natural Rubber | 1 0 0 | 1 0 0 | 1 0 0 | 1 0 0 | 1 0 0 | 1 0 0 | 1 0 0 |
| Hollow Ceramics Beads | 1 0 | — | — | — | — | — | — |
| Hollow Ceramics Beads | — | 1 0 | — | — | — | — | — |
| Solid Ceramics Beads | — | — | 2 0 | — | — | — | — |
| Mica A | — | — | — | 1 0 | — | — | — |
| Mica B | — | — | — | — | 1 0 | — | — |
| Micro Spherical Resin Carbide | — | — | — | — | — | 1 0 | — |
| Micro Spherical Resin Carbide | — | — | — | — | — | — | 1 0 |
| Carbon Black | 3 0 | 3 0 | 3 0 | 3 0 | 3 0 | 3 0 | 3 0 |
| Vulcanizing Agent (Sulfur) | 2. 5 | 2. 5 | 2. 5 | 2. 5 | 2. 5 | 2. 5 | 2. 5 |
| Vulcanization Accelerator CZ | 1 | 1 | 1 | 1 | 1 | 1 | 1 |
| Zinc Oxide | 5 | 5 | 5 | 5 | 5 | 5 | 5 |
| Stearic Acid | 1 | 1 | 1 | 1 | 1 | 1 | 1 |
| Antioxidant | 4. 5 | 4. 5 | 4. 5 | 4. 5 | 4. 5 | 4. 5 | 4. 5 |
| Naphthene Mineral Oil | 5 | 5 | 5 | 5 | 5 | 5 | 5 |

## TABLE 3

| | Embodiment | Comparative Examples | | |
|---|---|---|---|---|
| | 1 5 | 1 | 2 | 3 |
| Natural Rubber | 1 0 0 | 1 0 0 | 1 0 0 | 1 0 0 |
| Micro Spherical Resin Carbide | 1 0 | — | — | — |
| Nylon 66 Short Fiber | — | — | 1 0 | — |
| Aramid Short Fiber | — | — | — | 1 0 |
| Carbon Black | 3 0 | 4 0 | 1 2 | 2 5 |
| Vulcanizing Agent (Sulfur) | 2. 5 | 2. 5 | 2. 5 | 2. 5 |
| Vulcanization Accelerator CZ | 1 | 1 | 1 | 1 |
| Zinc Oxide | 5 | 5 | 5 | 5 |
| Stearic Acid | 1 | 1 | 1 | 1 |
| Antioxidant | 4. 5 | 4. 5 | 4. 5 | 4. 5 |
| Naphthene Mineral Oil | 5 | 5 | 1 0 | 1 0 |

EP 0 588 154 A2

TABLE 4

| | | Embodiments | | | | | | |
|---|---|---|---|---|---|---|---|---|
| | | 1 | 2 | 3 | 4 | 5 | 6 | 7 |
| Filler Material | | NY6 Griding Object | NY6 Griding Object | Spherical NY6 | Spherical Resin | Spherical Phenol Resin | Hollow Glass | Hollow Ceramics |
| Average Maximum Dimension (μm) | | 40 | 140 | 38 | 10 | 50 | 10 | 45 |
| Filling Amount (phr) | | 10 | 10 | 20 | 10 | 10 | 10 | 10 |
| Roll Workability | | ○ | ○ | ○ | ○ | ○ | ○ | ○ |
| Normal Materiality | Tensile Strength (kgf/cm²) | 192 | 171 | 187 | 228 | 215 | 222 | 203 |
| | Shear Extension (%) | 517 | 459 | 524 | 546 | 544 | 550 | 520 |
| | Hardness (JIS-A) | 57 | 57 | 58 | 57 | 56 | 56 | 56 |
| Dynamic Characteristics | Static Spring Constant (kgf/mm) | 42.5 | 46.6 | 48.5 | 44.2 | 40.8 | 46.9 | 47.0 |
| | Dynamic Spring Constant (kgf/mm) | 65.7 | 66.7 | 75.7 | 67.4 | 63.7 | 71.0 | 72.1 |
| | Dynamic Magnification | 1.55 | 1.43 | 1.56 | 1.52 | 1.56 | 1.51 | 1.53 |
| Fatigue Resistance | Frequency for Generating Flaw (ten thousand) | 7.3 | 3.5 | 7.5 | 9.5 | 8.7 | 11.0 | 8.0 |

TABLE 5

| | | Embodiments | | | | | | |
|---|---|---|---|---|---|---|---|---|
| | | 8 | 9 | 1 0 | 1 1 | 1 2 | 1 3 | 1 4 |
| Filler Material | | Hollow Ceramics Beads | | Solid Ceramics | Mica $2\mu$ | Mica $6.2\mu$ | Micro Spherical Resin Carbide | |
| Average Maximum Dimension ($\mu$m) | | 1 1 5 | 1 7 5 | 1 0 | 2 | 6. 2 | 1 0 | 1 0 0 |
| Filling Amount (phr) | | 1 0 | 1 0 | 2 0 | 1 0 | 1 0 | 1 0 | 1 0 |
| Roll Workability | | ◯ | ◯ | ◯ | ◯ | ◯ | ◯ | ◯ |
| Normal Materiality | Tensile Strength (kgf/cm²) | 1 7 3 | 1 7 6 | 2 2 4 | 2 6 2 | 2 6 7 | 2 5 1 | 2 0 5 |
| | Shear Extension (%) | 4 7 2 | 4 5 8 | 5 4 5 | 6 0 9 | 6 3 6 | 5 6 6 | 5 0 0 |
| | Hardness (JIS-A) | 5 6 | 5 8 | 5 6 | 5 7 | 5 8 | 5 7 | 5 7 |
| Dynamic Characteristics | Static Spring Constant (kgf/mm) | 4 5. 9 | 4 3. 8 | 4 7. 4 | 4 1. 4 | 4 6. 7 | 4 2. 0 | 4 3. 2 |
| | Dynamic Spring Constant (kgf/mm) | 7 0. 8 | 6 8. 4 | 7 0. 4 | 6 5. 7 | 7 3. 7 | 6 5. 4 | 6 6. 0 |
| | Dynamic Magnification | 1. 5 4 | 1. 5 6 | 1. 4 9 | 1. 5 9 | 1. 5 8 | 1. 5 6 | 1. 5 3 |
| Fatigue Resistance | Frequency for Generating Flaw (ten thousand) | 4. 6 | 4. 0 | 9. 5 | 1 0. 0 | 9. 0 | 1 0. 0 | 7. 5 |

EP 0 588 154 A2

TABLE 6

| | | Embodiment | Comparative Examples | | |
|---|---|---|---|---|---|
| | | 15 | 1 | 2 | 3 |
| Filler Material | | Resin Carbide | (Carbon Black) | NY66 Fiber | Aramid Fiber |
| Average Maximum Dimension (μm) | | 500 | (0.05) | 3000 | 3000 |
| Filling Amount (phr) | | 10 | (10) | 10 | 10 |
| Roll Workability | | ○ | ○ | × | × |
| Normal Materiality | Tensile Strength (kgf/cm²) | 150 | 283 | 102 | 165 |
| | Shear Extension (%) | 435 | 561 | 114 | 516 |
| | Hardness (JIS-A) | 56 | 60 | 62 | 65 |
| Dynamic Characteristics | Static Spring Constant (kgf/mm) | 42.4 | 45.4 | 47.3 | 43.4 |
| | Dynamic Spring Constant (kgf/mm) | 69.4 | 89.9 | 74.8 | 66.5 |
| | Dynamic Magnification | 1.64 | 1.98 | 1.58 | 1.53 |
| Fatigue Resistance | Frequency for Generating Flaw (ten thousand) | 3.0 | 10.0 | <1 | <1 |

Concerning the rollability, ○ means excellent, X means poor. The normal materiality was measured on the basis of JIS K 6301. The static spring constant and the dynamic spring constant were measured according to the following method.

(Static Spring Constant)

As shown in Figure 1, a thin and disk-shaped metal fitting 2 having the diameter of 60mm and the thickness of 6mm was attached to the upper surface and the lower surface of a thick and disk-shaped vibration-proof rubber 1 having the diameter of 50mm and the height of 25mm. Then, the vibration-proof rubber 1 was compressed in the cylindrical axis direction to have the height of 18mm. Then, the vibration-proof rubber returned to the former state. After that, the vibration-proof rubber was again compressed in the cylindrical axis direction, and the static spring constant was calculated on the basis of the load when the deflection were 1.5mm and 3.5mm, which were known from the load deflection curve.

(Dynamic Spring Constant)

As shown in Figure 1, the vibration-proof rubber 1 was compressed in the cylindrical axis direction to have the height of 22.5mm. Then, constant variable and harmonious compression pressure vibration having

12

the amplitude of 0.05mm and the frequency of 100Hz was applied from downward to the vibration-proof rubber 1 around the position where the vibration-proof rubber 1 was compressed. After that, the dynamic spring constant was calculated on the basis of JIS K 6394 by means of the dynamic load which was detected by an upper load cell (not shown).

The dynamic magnification was calculated by the ratio between the dynamic spring constant and the static spring constant.

As shown in Figure 2, cylindrical-shaped rubber having the diameter of 25mm and the height of 15mm was used for testing the shear fatigue. A metal fitting having the opposite surface whose diameter was 35mm was vulcanized and connected to the upper end surface and the lower end surface of the cylindrical-shaped rubber while the cylindrical-shaped rubber was vulcanized. The amount of the shear fatigue was in the range of 0 to 15 $\mu$m, and the shear fatigue was continuously applied on the cylindrical-shaped rubber at 300 times per minute. Then, the occurence of the flaw on the surface of the cylindrical-shaped rubber was checked at every 10000 times, and the number of times was calculated until the flaw occurred.

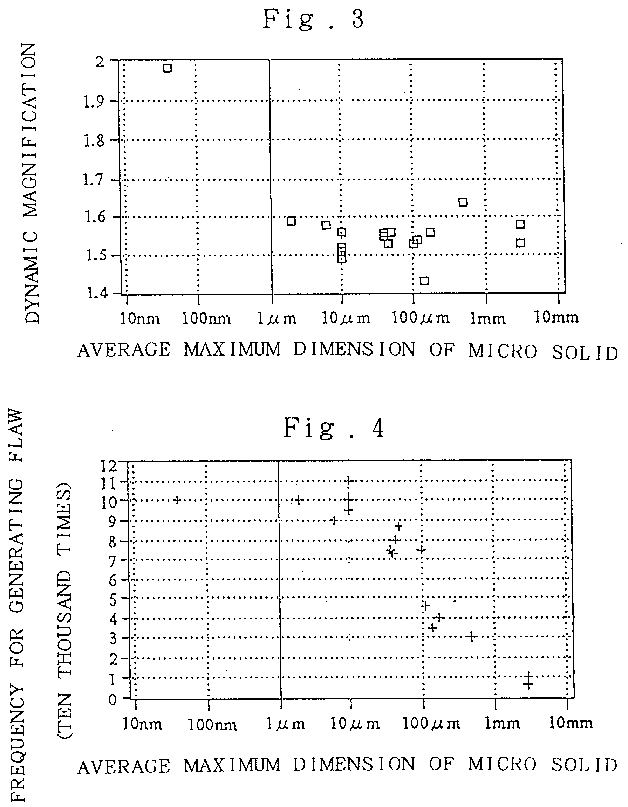

Furthermore, Figure 3 shows the relationship between the average maximum dimension of the micro solid and the dynamic magnification on the basis of the above measuring result. Figure 4 shows the relationship between the average maximum dimension of the micro solid and the fatigue resistance. In Figure 3, the horizontal axis shows the average maximum dimension of the micro solid, and the vertical axis shows the dynamic magnification. In Figure 4, the horizontal axis shows the average maximum dimension of the micro solid, and the vertical axis shows the frequency for generating the flaw which was caused by the shear fatigue.

As seen from Figure 3, in the Preferred Embodiments 1 to 15 and the Comparative Examples 2 to 3, when the average maximum dimension of the micro solid was not less than 1 $\mu$m, the dynamic magnification of the rubber composition was low, namely, it was in the range of 1.43 to 1.64. On the contrary, in the Comparative Example 1, the average maximum dimension was less than 1 $\mu$m so that the dynamic magnification was high, namely, it was 1.98. In the Comparative Example 1, carbon-black was used as the micro solid, and the average particle diameter of carbon-black was considered as the average maximum dimension.

As above-described, the dynamic magnification of the rubber composition was much influenced by the average maximum dimension of the micro solid. And, when the average maximum dimension was not less than 1 $\mu$m, excellent effect was obtained.

As seen from Figure 4, when the average maximum dimension of the micro solid was over 10 $\mu$m, the fatigue resistance of the micro solid was gradually deteriorated as the average maximum dimension was increased. Under the testing condition, the rubber composition shows the same degree of the fatigue resistance as shown in the rubber composition containing carbon-black when the average maximum dimension of the micro solid was about 50 $\mu$m. Most of the vibration-proof rubber can be used when the average maximum dimension of the micro solid was about 100 $\mu$m. When the fatigue resistance was not especially required, the rubber composition can be used when the average maximum dimension of the micro solid was about 500 $\mu$m or 1000 $\mu$m.

As seen from the above result, the rubber compositions in the Preferred Embodiments 1 to 15 are suitable for use as the vibraiton-proof rubber.

Sixteenth Preferred Embodiment

A Sixteenth Preferred Embodiment employed the same compositions and the same manners as described in the Thirteenth Preferred Embodiment except that 100 parts by weight of the blend rubber comprising 60 parts by weight of styrene-butadiene rubber and 40 parts by weight of butadiene rubber was used instead of natural rubber, and that 45 parts by weight of FEF-class carbon-black was used, and that 2 parts by weight of stearic acid was used; thereby obtaining the vibration-proof rubber.

Comparative Example 4

A Comparative Example 4 employed the same compositions and the same manners as described in the Sixteenth Preferred Embodiment except that 55 parts by weight of FEF-class carbon-black was used and that no micro solid was used; thereby obtaining the vibration-proof rubber.

Concerning the above obtained rubber compositions, the dynamic characteristics were measured in the same manners as shown in the Preferred Embodiments 1 to 15.

As seen from Table 7, the dynamic magnification of the vibration-proof rubber in the Preferred Embodiment 16 was 3.48. On the contrary, the dynamic magnification of the vibration-proof rubber in the

13

Comparative Example 4 was 4.30.

As known from the Preferred Embodiment 16 and the Comparative Example 4, addition of the micro solid was effective to control the dynamic magnification although the rubber material was changed.

Seventeenth Preferred Embodiment

A Seventeenth Preferred Embodiment employed the following compositions and the following manners to obtain a vibration-proof rubber composition.

100 parts by weight of chloroprene rubber, 10 parts by weight of micro spherical resin carbide whose average particle diameter was 10 $\mu$m and which was produced as Unibex GCP-10 by Unitika Ltd., 50 parts by weight of FEF-class carbon-black whose maximum dimension was 50nm, 5 parts by weight of zinc oxide, 4 parts by weight of magnesium oxide, 1 part by weight of stearic acid, 5 parts by weight of antioxidant and 15 parts by weight of aroma mineral oil were kneaded by a banbury mixer whose capacity was 1.7 liters. Then, 1 part by weight of vulcanization accelerator 22 and 0.5 part by weight of vulcanization accelerater TT were mixed by an open roll having 8 inches; thereby obtaining the vibration-proof rubber composition.

Comparative Example 5

A Comparative Example 5 employed the same compositions and the same manners as described in the Seventeenth Preferred Embodiment except that 60 parts by weight of FEF-class carbon-black was used and that no micro solid was used; thereby obtaining the vibration-proof rubber.

Concerning the above obtained rubber compositions, the dynamic characteristics were measured in the same manners as shown in the Preferred Embodiments 1 to 15.

As seen from Table 8, the dynamic magnification of the vibration-proof rubber in the Preferred Embodiment 17 was 3.29. On the contrary, the dynamic magnification of the vibration-proof rubber in the Comparative Example 5 was 4.21.

As known from the Preferred Embodiment 17 and the Comparative Example 5, addition of the micro solid was effective to control the dynamic magnification although the rubber material was changed.

## TABLE 7

| | | Embodiment 16 | Comp. Exam. 4 |
|---|---|---|---|
| Preparation | SBR (Styrene-butadiene Rubber) | 6 0 | 6 0 |
| | BR (Butadiene Rubber) | 4 0 | 4 0 |
| | Micro Spherical Resin Carbide | 1 0 | 0 |
| | FEF-class Carbon Black | 4 5 | 5 5 |
| | Vulcanizing Agent (Sulfur) | 2 . 5 | 2 . 5 |
| | Vulcanization Accelerator CZ | 1 | 1 |
| | Zinc Oxide | 5 | 5 |
| | Stearic Acid | 2 | 2 |
| | Antioxidant | 4 . 5 | 4 . 5 |
| | Naphthene Mineral Oil | 5 | 5 |
| Dynamic Characteristics | Static Spring Constant (kgf/mm) | 5 8 . 0 | 5 6 . 5 |
| | Dynamic Spring Constant (kgf/mm) | 2 0 2 . 2 | 2 4 3 . 0 |
| | Dynamic Magnification | 3 . 4 8 | 4 . 3 0 |

TABLE 8

| Preparation | Embodiment 17 | Comp. Exam. 5 |
|---|---|---|
| CR (Chloroprene Rubber) | 100 | 100 |
| Micro Spherical Resin Carbide | 10 | 0 |
| FEF-class Carbon Black | 50 | 60 |
| Zinc Oxide | 5 | 5 |
| Vulcanization Accelerator 22 | 1 | 1 |
| Vulcanization Accelerator TT | 0.5 | 0.5 |
| Magnesium Oxide | 4 | 4 |
| Stearic Acid | 1 | 1 |
| Antioxidant | 5 | 5 |
| Aroma Mineral Oil | 15 | 15 |
| **Dynamic Characteristics** | | |
| Static Spring Constant (kgf/mm) | 64.7 | 61.0 |
| Dynamic Spring Constant (kgf/mm) | 212.8 | 257.0 |
| Dynamic Magnification | 3.29 | 4.21 |

Eighteenth Preferred Embodiment

An Eighteenth Preferred Embodiment employed the same compositions and the same manners as described in the First Preferred Embodiment except that 23.6 parts by weight of solid glass beads whose average particle diameter was 8 μm and which was produced as EGB-731 by Toshiba Paroteeny was used instead of A1030BRL (140 pass); thereby obtaining the vibration-proof rubber.

Nineteenth Preferred Embodiment

A Nineteenth Preferred Embodiment employed the same compositions and the same manners as described in the First Preferred Embodiment except that 20 parts by weight of hollow glass beads whose average particle diameter was in the range of 8 to 12 μm and which was produced as HSC-110 by Toshiba Paroteeny was used instead of A1030BRL (140 pass); thereby obtaining the vibration-proof rubber.

Twentieth Preferred Embodiment

A Twentieth Preferred Embodiment employed the same compositions and the same manners as described in the First Preferred Embodiment except that 10 parts by weight of solid ceramics beads whose average particle diameter was 10 μm and which was produced as Superflow by Onoda Cement Co. Ltd. was used instead of A1030BRL (140 pass); thereby obtaining the vibration-proof rubber.

16

Twenty-first Preferred Embodiment

A Twenty-first Preferred Embodiment employed the same compositions and the same manners as described in the Thirteenth Preferred Embodiment; thereby obtaining the vibration-proof rubber.

Twenty-second Preferred Embodiment

A Twenty-second Preferred Embodiment employed the same compositions and the same manners as described in the First Preferred Embodiment; thereby obtaining the vibration-proof rubber.

Twenty-third Preferred Embodiment

A Twenty-third Preferred Embodiment employed the same compositions and the same manners as described in the First Preferred Embodiment except that 10 parts by weight of mica whose average particle diameter was 27 $\mu$m and which was produced as A-7 by Yamaguchi Ummo Ltd. was used instead of A1030BRL (140 pass); thereby obtaining the vibration-proof rubber.

Twenty-fourth Preferred Embodiment

A Twenty-fourth Preferred Embodiment employed the same compositions and the same manners as described in the First Preferred Embodiment except that 20 parts by weight of potassium titanate whisker whose length was in the range of 10 to 20 $\mu$m and which was produced as Tofiker YN by Otsuka Chemical Co., Ltd. was used instead of A1030BRL (140 pass); thereby obtaining the vibration-proof rubber.

Twenty-fifth Preferred Embodiment

A Twenty-fifth Preferred Embodiment employed the same compositions and the same manners as described in the First Preferred Embodiment except that 20 parts by weight of potassium titanate whisker whose length was in the range of 10 to 20 $\mu$m and which was produced as Tismow N by Otsuka Chemical Co., Ltd. was used instead of A1030BRL (140 pass); thereby obtaining the vibration-proof rubber.

Twenty-sixth Preferred Embodiment

A Twenty-sixth Preferred Embodiment employed the same compositions and the same manners as described in the Seventh Preferred Embodiment; thereby obtaining the vibration-proof rubber.

Twenty-seventh Preferred Embodiment

A Twenty-seventh Preferred Embodiment employed the same compositions and the same manners as described in the First Preferred Embodiment except that 10 parts by weight of potassium titanate whose length was in the range of 10 to 20 $\mu$m and which was produced as Tofiker YN by Otsuka Chemical Co., Ltd. and 10 parts by weight of aramid short fiber whose average particle diameter was 0.8De X 0.6mm and which was produced as Coanex by Teijin Limited were used instead of A1030BRL (140 pass); thereby obtaining the vibration-proof rubber.

In the above Preferred Embodiments, the influence of the aspect ratio of the micro solid contained in the vibration-proof rubber was examined. In order to correctly examine the influence of the aspect ratio of the micro solid, the maximum dimenison of the micro solid was set in the range of 10 to 45 $\mu$m. In the Twenty-seventh Preferred Embodiment, the maximum dimension was 600 $\mu$m. In the Twenty-sixth Preferred Embodiment, the ceramics hollow sphere of a part of the micro solid was destroyed at the time of kneading. This was observed by microscope and measurement of specific gravity.

The components of the above Preferred Embodiments are shown in Table 9.

Concerning the above obtained rubber compositions, the dynamic characteristics were measured in the same manners as shown in the Preferred Embodiments 1 to 15.

As seen from Table 10, the dynamic magnification of the vibration-proof rubber in the Preferred Embodiments 18 to 27 were in the range of 1.49 to 1.82. In the Preferred Embodiment 1, the dynamic magnification of the vibration-proof rubber is 1.98. So, the above range was smaller than 1.98, and it is preferable.

17

TABLE 9

| | Embodiments | | | | | | | | | |
|---|---|---|---|---|---|---|---|---|---|---|
| | 18 | 19 | 20 | 21 | 22 | 23 | 24 | 25 | 26 | 27 |
| Natural Rubber | 100 | 100 | 100 | 100 | 100 | 100 | 100 | 100 | 100 | 100 |
| Solid Glass Beads | 23.6 | — | — | — | — | — | — | — | — | — |
| Hollow Glass Beads | — | 20 | — | — | — | — | — | — | — | — |
| Solid Ceramics Beads | — | — | 10 | — | — | — | — | — | — | — |
| Micro Spherical Resin Carbide | — | — | — | 10 | — | — | — | — | — | — |
| Nylon 6 Grinding Object | — | — | — | — | 10 | — | — | — | — | — |
| Mica | — | — | — | — | — | 10 | — | — | — | — |
| Potassium Titanate Whisker | — | — | — | — | — | — | 20 | — | — | 10 |
| Potassium Titanate Whisker | — | — | — | — | — | — | — | 20 | — | — |
| Hollow Ceramics Beads | — | — | — | — | — | — | — | — | 10 | — |
| Aramid Short Fiber | — | — | — | — | — | — | — | — | — | 10 |
| Carbon Black | 30 | 30 | 30 | 30 | 30 | 30 | 30 | 30 | 30 | 30 |
| Vulcanizing Agent (Sulfur) | 2.5 | 2.5 | 2.5 | 2.5 | 2.5 | 2.5 | 2.5 | 2.5 | 2.5 | 2.5 |
| Vulcanization Accelerator CZ | 1 | 1 | 1 | 1 | 1 | 1 | 1 | 1 | 1 | 1 |
| Zinc Oxide | 5 | 5 | 5 | 5 | 5 | 5 | 5 | 5 | 5 | 5 |
| Stearic Acid | 1 | 1 | 1 | 1 | 1 | 1 | 1 | 1 | 1 | 1 |
| Antioxidant | 4.5 | 4.5 | 4.5 | 4.5 | 4.5 | 4.5 | 4.5 | 4.5 | 4.5 | 4.5 |
| Naphthene Mineral Oil | 5 | 5 | 5 | 5 | 5 | 5 | 5 | 5 | 5 | 5 |

EP 0 588 154 A2

## TABLE 10

| | | | | | | | Embodiments | | | | |
| --- | --- | --- | --- | --- | --- | --- | --- | --- | --- | --- | --- |
| | | 18 | 19 | 20 | 21 | 22 | 23 | 24 | 25 | 26 | 27 |
| Filler Material | | Solid Glass | Hollow Glass | Solid Ceramics | Spherical Resin Carbide | NY6 Grinding Object | Mica 27 | Potassium Titanate Whisker | Potassium Titanate Whisker | Hollow Ceramics | Aramid Short Fiber |
| Average Particle Diameter | | 18 | 10 | 10 | 10 | 40 | — | 0.65 | 0.35 | 45 | 9 |
| Average Maximum Dimension | | 18 | 10 | 10 | 10 | 60 | 27 | 15 | 15 | 45 | 600 |
| Aspect Ratio:L/D | | 1 | 1 | 1 | 1 | 1.5 | 27 | 23 | 43 | 1 | 67 |
| Filling Amount (phr) | | 23.6 | 20 | 10 | 10 | 10 | 10 | 20 | 20 | 10 | 10 |
| Roll Workability | | ○ | ○ | ○ | ○ | ○ | ○ | ○ | ○ | ○ | × |
| Normal Materiality | Tensile Strength (kgm/cm²) | 218 | 196 | 240 | 251 | 192 | 279 | 262 | 272 | 203 | 215 |
| | Shear Extension (%) | 542 | 553 | 549 | 566 | 517 | 600 | 538 | 537 | 520 | 477 |
| | Hardness (JIS-A) | 57 | 57 | 55 | 57 | 57 | 56 | 60 | 60 | 56 | 68 |
| Dynamic Characteristics | Static Spring Constant (kgf/mm) | 33.9 | 42.4 | 41.4 | 42.0 | 42.5 | 52.5 | 46.9 | 56.7 | 47.0 | 57.3 |
| | Dynamic Spring Constant (kgf/mm) | 54.4 | 72.9 | 61.7 | 65.4 | 65.7 | 78.0 | 81.7 | 91.4 | 72.1 | 104.4 |
| | Dynamic Magnification | 1.60 | 1.72 | 1.49 | 1.56 | 1.55 | 1.49 | 1.74 | 1.61 | 1.53 | 1.82 |
| Fatigue Resistance | Frequency for Generating Flaw (ten thousand) | 10 | 8.5 | 18 | 10 | 7.3 | 2.3 | 4 | 3 | 8 | 1 |

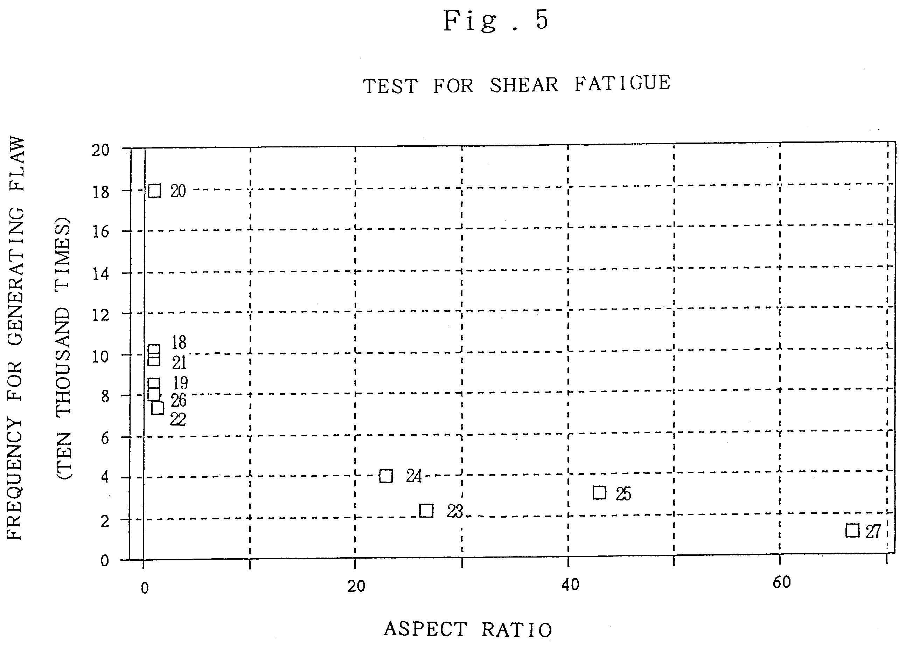

Figure 5 shows the relationship between the frequency for generating the flaw and the aspect ratio of the micro solid. As shown in Figure 5, when the aspect ratio was large, the frequency for generating the flaw was few. In the Twenty-seventh Preferred Embodiment, since the maximum dimension was 600 $\mu$m, it is different from other Embodiments. However, when the spherical micro solid having the small aspect ratio shows excellent resistance to shear fatigue.

19

Having now fully described the invention, it will be apparent to one of ordinary skill in the art that many changes and modifications can be made thereto without departing from the spirit or scope of the invention as set forth herein.

The vibration-proof rubber composition comprises a rubber elastic material and a micro solid having the maximum dimension of 1 to 1000 μm and the aspect ratio of not more than 10 which is dispersed and immersed into the rubber elastic material. Therefore, the vibration-proof rubber composition maintains the static controlability while it obtains excellent characteristics for decreasing vibration and noise. Furthermore, the vibration-proof rubber composition has excellent fatigue resistance.

## Claims

1. A vibration-proof rubber composition comprising a rubber elastic material and a micro solid having the maximum dimension of 1 to 1000 μm which is dispersed and immersed into said rubber elastic material.

2. A vibration-proof rubber composition according to claim 1, wherein said rubber elastic material comprises at least one of natural rubber and composite rubber.

3. A vibration-proof rubber composition according to claim 1, wherein the maximum dimension of said micro solid is 1 to 100 μm.

4. A vibration-proof rubber composition according to claim 1, wherein the maximum dimension of said micro solid is 1 to 50 μm.

5. A vibration-proof rubber composition comprising a rubber elastic material and a micro solid having the maximum dimension of 1 to 1000 μm and the aspect ratio of not more than 10 which is dispersed and immersed into said rubber elastic material.

6. A vibration-proof rubber composition according to claim 5, wherein said rubber elastic material comprises at least one of natural rubber and composite rubber.

7. A vibration-proof rubber composition according to claim 5, wherein the maximum dimension of said micro solid is 1 to 100 μm and the aspect ratio is not more than 2.

8. A vibration-proof rubber composition according to claim 5, wherein the maximum dimension of said micro solid is 1 to 50 μm and the aspect ratio is not more than 2.

Fig . 1

Fig . 2

## Fig . 3

## Fig . 4

Fig. 5

TEST FOR SHEAR FATIGUE